# EUROPEAN PATENT APPLICATION

(11) **EP 0 895 151 A1**
(43) Date of publication of application: **03.02.1999**
(21) Application number: 97305682.3
(22) Date of filing: 29.07.1997
(51) Int. Cl.: G06F 1/28

(54) **Charge life of batteries in plural-unit computer systems**

(71) Applicant: Hewlett-Packard Company, Palo Alto, California 94304 (US)
(72) Inventor: Proudler, Graeme John, Stoke Gifford, Bristol BS12 6XQ (GB)
(74) Representative: Coker, David Graeme

(57) **Abstract**

A computer system comprises a plurality of cooperating units (M1 to M7) each connected to a respective battery pack (B1 to B7). Operation of the system may include the steps of: determining an estimate of the remaining charge in each battery pack; determining an estimate of the future power or energy usage requirement of each unit; determining, from the estimated remaining charges and the estimated future power or energy usage requirements, an association between each unit and a respective one of the battery packs which would increase the period before any of the battery packs reaches the end of its charge life; and advising the user on altering the connections of the units to the battery packs in accordance with the determined association. In the case where at least a first one of the units (MA) is connectable to and disconnectable from the battery pack (BB) of a second one of the units (MB), operation of the system may include the steps of: determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and causing the first unit to draw energy in accordance with that determination.

## Description

This invention is concerned with the charge life of batteries in plural-unit computer systems.

It is envisaged that, in the future, computer systems will become smaller and more modular, so-called ultra-portable computers. Examples of the modular units might be a processor unit, a memory unit, an input unit, a display or visor unit, a camera unit, a telephone unit, a refrigerator (or other domestic appliance) unit and a motor vehicle unit. It is envisaged that most or all of these units will be powered by battery packs, although some may be mains powered, at least temporarily. It is also envisaged that some or all of these units will communicate with one another using short-range radio links, infrared links or other wireless links, although some of the units may be connected by wires, at least temporarily.

Depending upon the particular use to which the system is being put, it will be essential for some or all of the units to be operational. If the battery pack of one of those units becomes discharged, then the system will cease to operate.

In accordance with a first aspect of the invention, there is provided a method of operation of a computer system comprising a plurality of cooperating units each connected to a respective battery pack, the method comprising the steps of: determining a estimate of the remaining charge in each battery pack; determining an estimate of the future power or energy usage requirement of each unit; determining, from the estimated remaining charges and the estimated future power or energy usage requirements, an association between each unit and a respective one of the battery packs which would increase the period before any of the battery packs reaches the end of its charge life; and advising the user on altering the connections of the units to the battery packs in accordance with the determined association.

The advising step may involve advising the user simultaneously of the determined associations between the units and the battery packs. However, the advising step preferably comprises the steps of: determining a series of swaps of pairs of the battery packs; and advising the user of the determined series of swaps. Accordingly, there is no need for the user to keep a note of the new combination of units and battery packs, and there is no need for the user to be able to distinguish between the different battery packs. In this case, the swap series determining step may take into account the number of swaps during which one of the battery units having a low charge may be connected to one of the units having a high energy consumption.

The method may be used with such a system in which at least a first one of the units is connectable to and disconnectable from the battery pack of a second one of the units. In this case, the method preferably including the steps of: determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and causing the first unit to draw energy in accordance with that determination. Accordingly, when units are connected to different battery packs, battery management can take place, and this may be without necessity for user intervention.

This latter feature may be provided independently of the method of the first aspect of the invention. Consequently, in accordance with a second aspect of the invention, there is provided a method of operation of a computer system comprising a plurality of cooperating units each having and being connected to a respective battery pack and at least a first one of the units being connectable to and disconnectable from the battery pack of a second one of the units, the method comprising the steps of: determining estimates of the remaining charges in the battery packs of the first and second units; determining estimates of the future power or energy usage requirements of the first and second units; determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and causing the first unit to draw energy in accordance with the latter determination.

In the case where the method is used with such a system in which the second unit is connectable to and disconnectable from the battery pack of the first unit, the method may include the steps of: determining, from the estimated remaining charges and the estimated future power or energy usage requirements, whether the second unit should draw energy from its battery pack and/or from the battery pack of the first unit so as to increase the period for which the first and second units can both be powered by their respective battery packs should the second unit be disconnected from the battery pack of the first unit; and causing the second unit to draw energy in accordance with that determination.

The method of either the first or second aspect of the invention may be used with such a system in which at least one of the units includes means for monitoring the battery pack connected thereto. In this case, the step of determining the estimate of the remaining charge of each battery pack may include the step of obtaining data from the monitoring means of that unit or those units.

The method of either the first or second aspect of the invention may alternatively or additionally be used with such a system in which at least one of the battery packs includes means for monitoring that battery pack. In this case, the step of determining the estimate of the remaining charge of each battery pack may include the step of obtaining data from the monitoring means of that battery pack or those battery packs. So-called "smart battery" packs may thus be used, which can provide an improved estimate of the remaining battery capacity.

In either method, the step of determining the estimate of the remaining charge in each battery pack may comprise, for at least one of the battery packs, determining estimates of the remaining charge in that battery pack when connected to different ones of the units, and the association determining step takes into account the different estimates for that battery pack.

In accordance with a third aspect of the invention, there is provided a computer system comprising: a plurality of cooperating units each connected to a respective battery pack; means for determining an estimate of the remaining charge in each battery pack; means for determining an estimate of the future power or energy usage requirement of each unit; means for determining, from the estimated remaining charges and the estimated future power or energy usage requirements, an association between each unit and a respective one of the battery packs which would increase the period before any of the battery packs reaches the end of its charge life; and means for advising the user on altering the connections of the units to the battery packs in accordance with the determined association.

In accordance with a fourth aspect of the invention, there is provided a computer system comprising: a plurality of cooperating units each having and being connected to a respective battery pack; means for disconnectably connecting at least a first one of the units to the battery pack of a second one of the units; means for determining estimates of the remaining charges in the battery packs of the first and second units; means for determining estimates of the future power or energy usage requirements of the first and second units; means for determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and means for causing the first unit to draw energy in accordance with the determination of the latter determining mess.

Specific embodiments of the present invention will now be described, purely by way of example, with reference to the accompanying drawings, in which:
- Figure 1: is a block diagram of a computer system having a number of modules and battery packs;
- Figure 2: is a circuit diagram of one of the battery packs of figure 1;
- Figure 3: shows more detail of two of the modules and battery packs of figure 1; and
- Figure 4: shows more detail of another three of the modules and battery packs of figure 1.

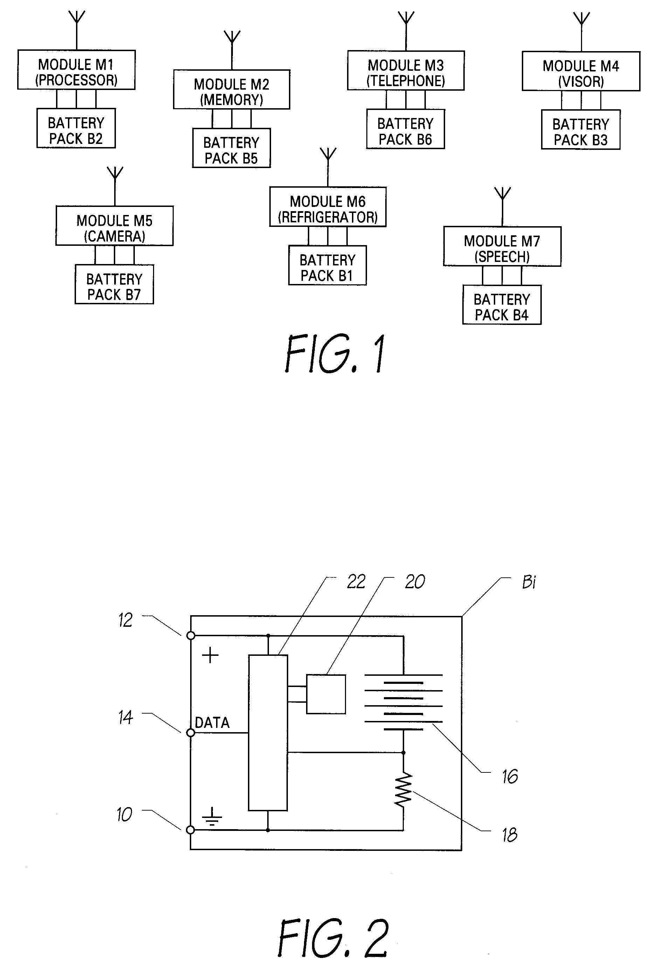

Referring to figure 1, the computer system comprises a number of modules M1 to M7, which may, for example, be a processor module M1, a memory module M2, a telephone module M3, a visor model M4, a camera module M5, a refrigerator module M6 and a speech recognition module M7. Each module M1 to M7 has a respective transmitter and receiver for communicating with one or more of the other modules. Also, each module has a respective battery pack B1 to B7. As shown in the drawing, battery packs B1 to B7 are connected to modules M6, M1, M4, M7, M2, M3 and M5, respectively.

As shown in figure 2, each battery pack B*i* has a ground terminal 10, a voltage terminal 12 and a serial data terminal 14. A rechargeable cell 16 has its positive side connected to the voltage terminal 12, and its negative side connected via a current sensing resistor 18 to the ground terminal 10. The battery pack B*i* also has at least one sensor 20, for example a temperature sensor, and an integrated circuit 22 which is connected to the ground, voltage and serial data termals 10, 12, 14, the sensor 20 and the negative side of the cell 16. The integrated circuit determines battery capacity by monitoring the amount of charge input to or removed from the cell 16. It measures the discharge and charge currents, estimates self-discharge, monitors the battery for low-battery voltage thresholds, and compensates for temperature and charge/discharge rates. The charge measurement derives from monitoring the voltage across the current sensing resistor 18, and the available battery charge is determined by monitoring that voltage over time and correcting the measurement for environmental and operating conditions. The resultant battery capacity data is output to the serial data terminal 14. Such a battery pack B*i* as described so far with reference to figure 2 is known per se, and has been referred to as a "smart battery". An example of a combined integrated circuit 22 and temperature sensor 20 is the "bq2010 gas gauge" IC produced by Benchmarq Microelectronics Inc, Dallas 75252, Texas, USA (http://www.benchmarq.com). Each battery pack B*i* is also arranged to provide in the output from its serial data terminal 14 an identity code of that battery pack B*i*.

In the system of figure 1, each module M1 to M7 monitors its current consumption and frequency of usage. The system of figure 1 is programmed so that, at regular intervals, and/or when triggered by the user, a battery life optimisation process is performed, as follows. Each module M1 to M7 reads from its battery pack B*i* the respective battery capacity data. Also, from its own monitoring of current consumption and frequency of usage, each module M1 to M7 determines the power which it requires. Each of the modules M2 to M7, except a predetermined one of them (for example, module M1), then supplies its power required data and its battery pack identity code and available capacity data to the predetermined one M1 of the modules. The predetermined module M1 them performs a process of determining which combination of modules and battery packs will result in all modules of the system being powered for as long as possible.

In one example of this process, the modules M1 to M7 are monotonically ordered according to required power consumption, the battery packs B1 to B7 are monotonically ordered according to their remaining charges, and the modules and battery packs are then paired according to their positions in the two orders.

In another example of this process, the charge lifetime of each battery pack B1 to B7 with each of the modules M1 to M7 is computed, and the combinations which provide the longest overall lifetime are selected. This example of the process can take account of different modules M1 to M7 seeing significantly different capacities in the same battery pack B1 to B7, for example because they discharge the battery packs to different end voltages.

Once the required new combination of modules M1 to M7 and battery packs B1 to B7 has been determined, in one example, the new combination is advised to the user, for example using the visor module M4. The user can then disconnect the modules and battery packs and reconnect them as required. The system may then check that the correct combination has been chosen, and if there is an error can advise the user of it.

This may require the user to make a note of the new combination, since the system cannot operate while the battery packs are removed. To deal with this problem, the system may be programmed to instruct the user to swap pairs of battery packs until the required combination is achieved. This places a lesser intellectual demand on the user, and does not require marking of the batteries. The rearrangement can be planned by describing the transformation in terms of disjoint sets. Accordingly, a set can be considered as containing a number of elements equal to the number of modules. Each position in the set corresponds to one of the modules, and the value at that position corresponds to the battery pack attached to that module. It is therefore required to convert one combination into another by sequentially interchanging pairs of the elements.

Starting with the original combination, a value *a* is chosen, and the start value *b* which occupies the final destination of *a* is noted. The start value *c* which occupies the final destination of *b* is then noted, and so on until the cycle repeats. If the cycle repeats and some values have not been moved, the process is started again with one of the unmoved values. This is repeated, if necessary, until all values have been moved.

The cycles thus generated indicate the best way to perform the rearrangement: for each cycle, the first pair of values (the first value and the second value) are the first values to be swapped; the second pair of values (the second value and the third value) are the second values to be swapped, and so on until the end of the cycle. The order in which cycles are performed does not matter, and a cycle containing only one value indicates that the value does not need to move.

Since (by definition) each cycle is cyclic, there are several ways of achieving a transformation. Each involves the same number of steps, but one way may be better than another in that it minimises the time for which a low battery is temporarily connected to a high power device. Accordingly, each option is scored to minimise power mismatch before telling the user what to do.

To give a specific example, suppose that there are six modules M1 to M6 which at the start are connected to battery packs B1 to B6, respectively. This may be represented as "Start B6 B5 B4 B3 B2 B1". Suppose also that it has been determined that the modules M1 to M6 should be connected to battery packs B1, B3, B2, B6, B4, B5, respectively. This may be represented as "End B5 B4 B6 B2 B3 B1". The cycles and transformations may be as follows:

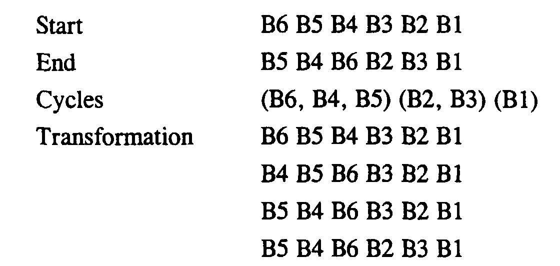

Alternatively, the cycles and transformations may be as follows:

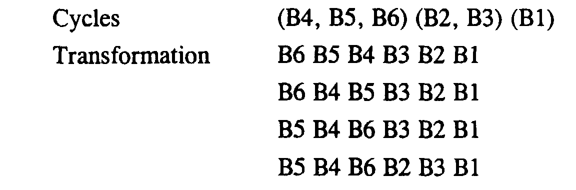

They may also, for example, be as follows:

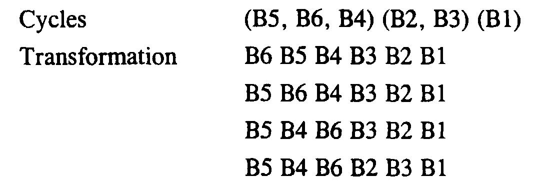

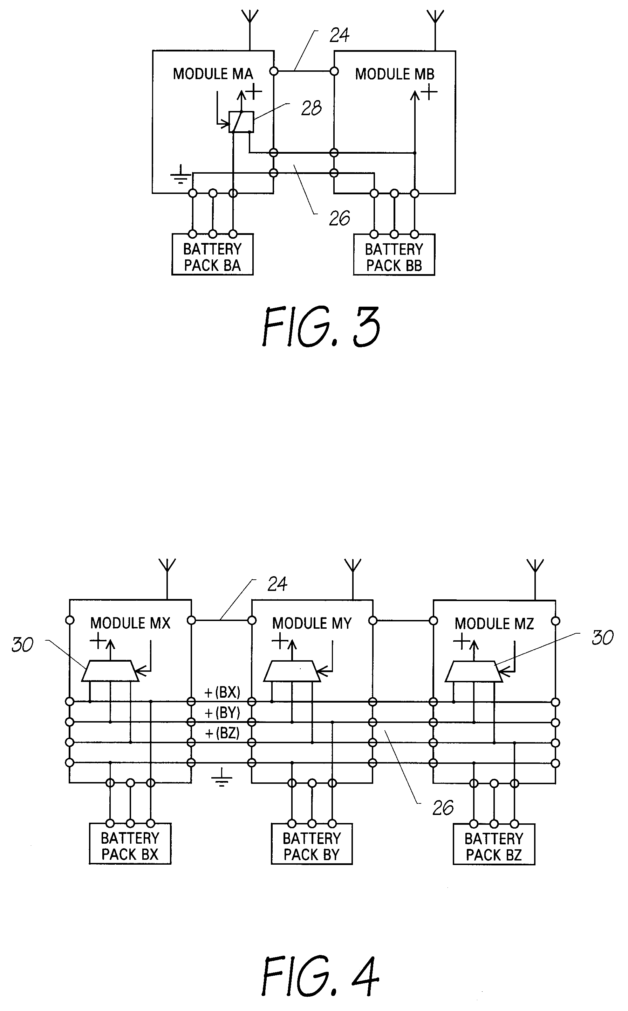

As described so far with reference to figures 1 and 2, each of the modules M1 to M7 is connected to its own battery pack B1 to B7, and the modules communicate by wireless technology. As shown in figure 3, two or more of the modules, MA, MB may also be connected, at least temporarily, by a wired link, which may include one or more conductors 24 for data communication and a pair of conductors 26 for power transfer. In the module MA, a controllable switch 28 is provided so that the module MA may draw its power from its own battery pack BA or from the battery pack BB of the module MB. The module MA is programmed to control the switch 28 so that, in dependence upon the remaining capacities of the battery packs BA, BB and the power requirements of the modules MA, MB, the period of time for which both modules MA, MB can continue to be powered, should the power conductors 26 be disconnected, is maximised.

In a development of the concept illustrated in figure 3, the module MB may also be provided with a controllable switch 28 so that it also can draw power either from its own battery pack BB, or from the other battery pack BA.

A further development of the concept illustrated in figure 3 is shown in figure 4. As shown, three of the modules MX, MY, MZ each have a power multiplexer 30, and the power conductors 26, when connected, can supply power from any of the battery packs BX, BY, BZ to any of the modules MX, MY, MZ. The multiplexers 30 are controlled by the respective modules MX, MY, MZ, in dependence upon the estimated remaining charges of the battery packs BX, BY, BZ and the estimated future power or energy usage requirements of the modules MX, MY, MZ, so that the modules MX, MY, MZ draw current from the battery packs BX, BY, BZ in such as way as to maximise the period for which all of the modules can be powered by their respective battery packs BX, BY, BZ should the power connections 26 be disconnected.

It should be noted that the embodiments have been described above purely by way of example, and that many other modifications and developments may be made to them within the scope of the present invention.

## Claims

1. A method of operation of a computer system comprising a plurality of cooperating units each connected to a respective battery pack, the method comprising the steps of:
determining an estimate of the remaining charge in each battery pack;
determining an estimate of the future power or energy usage requirement of each unit;
determining, from the estimated remaining charges and the estimated future power or energy usage requirements, an association between each unit and a respective one of the battery packs which would increase the period before any of the battery packs reaches the end of its charge life; and
advising the user on altering the connections of the units to the battery packs in accordance with the determined association.

2. A method as claimed in claim 1, wherein the advising step involves advising the user simultaneously of the determined associations between the units and the battery packs.

3. A method as claimed in claim 1, wherein the advising step comprises the steps of:
determining a series of swaps of pairs of the battery packs; and
advising the user of the determined series of swaps.

4. A method as claimed in claim 3, wherein the swap series determining step takes into account the number of swaps during which one of the battery units having a low charge may be connected to one of the units having a high energy consumption.

5. A method as claimed in any preceding claim for use with such a system in which at least a first one of the units is connectable to and disconnectable from the battery pack of a second one of the units, the method including the steps of:
determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and
causing the first unit to draw energy in accordance with that determination.

6. A method of operation of a computer system comprising a plurality of cooperating units each having and being connected to a respective battery pack and at least a first one of the units being connectable to and disconnectable from the battery pack of a second one of the units, the method comprising the steps of:
determining estimates of the remaining charges in the battery packs of the first and second units;
determining estimates of the future power or energy usage requirements of the first and second units;
determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and
causing the first unit to draw energy in accordance with the latter determination.

7. A method as claimed in claim 5 or 6 for use with such a system in which the second unit is connectable to and disconnectable from the battery pack of the first unit, the method including the steps of:
determining, from the estimated remaining charges and the estimated future power or energy usage requirements, whether the second unit should draw energy from its battery pack and/or from the battery pack of the first unit so as to increase the period for which the first and second units can both be powered by their respective battery packs should the second unit be disconnected from the battery pack of the first unit; and
causing the second unit to draw energy in accordance with that determination.

8. A method as claimed in any preceding claim, for use with such a system in which at least one of the units includes means for monitoring the battery pack connected thereto, wherein the step of determining the estimate of the remaining charge of each battery pack includes the step of obtaining data from the monitoring means of that unit or those units.

9. A method as claimed in any of claims 1 to 7, for use with such a system in which at least one of the battery packs includes means for monitoring that battery pack, wherein the step of determining the estimate of the remaining charge of each battery pack includes the step of obtaining data from the monitoring means of that battery pack or those battery packs.

10. A method as claimed in any preceding claim, wherein the step of determining the estimate of the remaining charge in each battery pack comprises, for at least one of the battery packs, determining estimates of the remaining charge in that battery pack when connected to different ones of the units, and the association determining step takes into account the different estimates for that battery pack.

11. A computer system comprising:
a plurality of cooperating units each connected to a respective battery pack;
means for determining an estimate of the remaining charge in each battery pack;
means for determining an estimate of the future power or energy usage requirement of each unit;
means for determing, from the estimated remaining charges and the estimated future power or energy usage requirements, an association between each unit and a respective one of the battery packs which would increase the period before any of the battery packs reaches the end of its charge life; and
means for advising the user on altering the connections of the units to the battery packs in accordance with the determined association.

12. A computer system comprising:
a plurality of cooperating units each having and being connected to a respective battery pack;
means for disconnectably connecting at least a first one of the units to the battery pack of a second one of the units;
means for determining estimates of the remaining charges in the battery packs of the first and second units;
means for determining estimates of the future power or energy usage requirements of the first and second units;
means for determining, from the estimated remaining charges and the estimated future power or energy usage requirements, whether the first unit should draw energy from its battery pack and/or from the battery pack of the second unit so as to increase the period for which the first and second units can both be powered by their respective battery packs should the first unit be disconnected from the battery pack of the second unit; and
means for causing the first unit to draw energy in accordance with the determination of the latter determining means.
